(19) Europäisches Patentamt / European Patent Office / Office européen des brevets

(11) **EP 3 711 841 A1**

(12) **EUROPEAN PATENT APPLICATION**

(43) Date of publication:
**23.09.2020 Bulletin 2020/39**

(51) Int Cl.:
**B01D 46/00** (2006.01)    **B01D 46/24** (2006.01)
**B01D 46/42** (2006.01)    **F02M 35/024** (2006.01)
**F02M 35/12** (2006.01)

(21) Application number: **20164032.3**

(22) Date of filing: **18.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2019  IT 201900004189**

(71) Applicant: **UFI Innovation Center S.r.l.
38061 Ala (Trento) (IT)**

(72) Inventor: **GIRONDI, Giorgio
I-38061 Ala, TRENTO (IT)**

(74) Representative: **Gamba, Alessandro
Jacobacci & Partners S.p.A.
Piazza della Vittoria, 11
25122 Brescia (IT)**

(54) **AIR FILTRATION DEVICE**

(57)    The invention relates to an air filtration device (1) of an air intake system of a vehicle comprising an air intake system duct fluidly connecting the air filtration device (1) and the engine of the vehicle.

The air filtration device (1) comprises a tubular filter (3) comprising a central cavity (300) defined by an inner surface (30), wherein the tubular filter (3) is traversable by the intake air from the outside to the inside.

Furthermore, the air filtration device (1) comprises an internal structure (4) housed in the central cavity (300) comprising:

i) an outflow wall (5) which defines inside the central cavity (300) an intake channel (300') into which clean air drawn through the tubular filter (3) flows and an inner duct (300");

ii) at least one silencing element (6) suitable to intercept and dampen the sound waves produced by the vehicle engine, wherein the silencing element (6) is positioned on the outflow wall (5) in a predefined axial position along the axis (X-X).

FIG.1a

EP 3 711 841 A1

## Description

Field of application

The present invention relates to an air filtration device and an air intake system of the engine of a vehicle comprising said air filtration device.

The context which the present invention lies in is the automotive sector. In particular, the present invention refers specifically to the air which is aspirated from the external environment to reach the combustion chamber of the internal combustion engine. In particular, therefore, the air filtration device of the present invention is fluidly connected with the combustion chamber of the internal combustion engine where combustion and thus "spark ignition" takes place.

State of the art

In the state of the art solutions of air intake systems of a vehicle engine are known of which draw in air from the external environment to convey it to the internal combustion chamber of the relative endothermic motor.

Such systems typically comprise filtration devices suitable to filter the dispersed particles from the air, preventing the access of unwanted material inside the combustion chamber, such as dirt or dust.

In order to improve the functioning and performance of the internal combustion engine, it is essential for such systems to allow the greatest possible quantity of air to enter, at the same time effectively filtering it.

To achieve this objective, it is therefore essential that the filtration device has the widest possible filtering surface through which the air flows and that such surface at the same time performs effective filtration. To achieve this objective in the prior art, solutions of air filtration devices have been developed comprising specific components and/or elements suitable for improving the filtering and intake action of the air filters present for the purpose.

However, in these state-of-the-art solutions in which the exploitation of the filter surface has been improved, another problem has been found. In fact, these types of air filtration devices make the vehicles on which they are mounted excessively and undesirably noisy.

Examples of such known solutions in which said technical problem has been encountered are for example shown in document number WO2013057549 on behalf of the Applicant.

Solution according to the invention

The need is therefore strongly felt to have an air filtration device that increases the filtered air flow to the engine but does not make the vehicle on which it is installed particularly noisy.

The purpose of the present invention is therefore to provide an air filtration device which satisfies these requirements, overcoming the drawbacks of the prior art mentioned above.

Such purpose is achieved by an air filtration device according to claim 1 and by an air intake system of a vehicle engine which comprises said air filtration device according to claim 17. The claims dependent on these show preferred embodiments involving further advantageous aspects.

Description of the drawings

Further characteristics and advantages of the invention will, in any case, be evident from the description given below of its preferred embodiments, made by way of a non-limiting example with reference to the appended drawings, wherein:

- figures 1 and 1a respectively show a side view of an air filtration device according to a preferred embodiment and a longitudinal cross-section thereof;
- figures 2 and 2a respectively show a perspective view of an air filtration device according to a preferred embodiment and a longitudinal cross-section thereof;

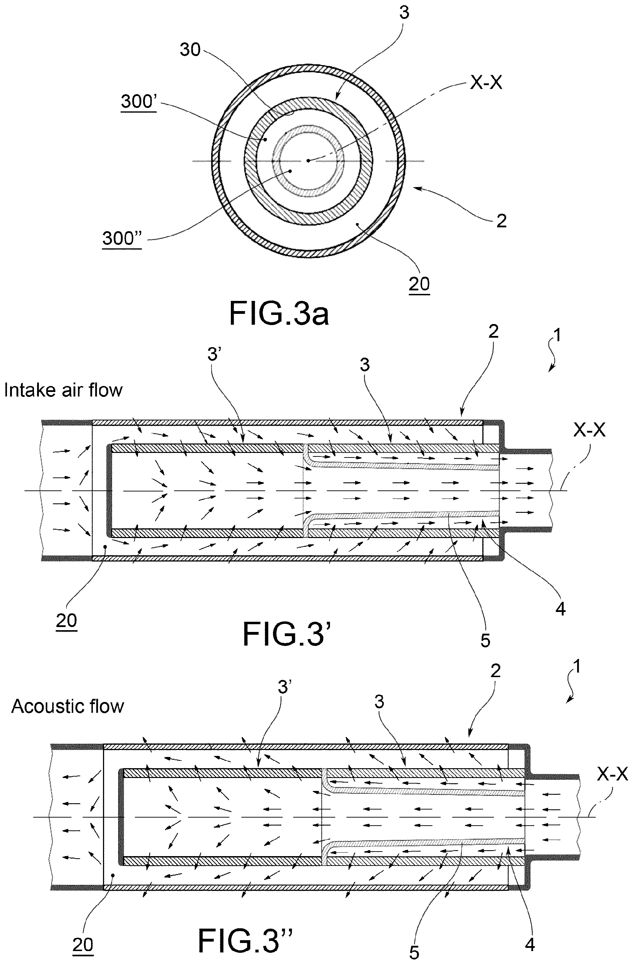

- Figures 3' and 3" show two schematic diagrams of an air filtration device according to a preferred embodiment in which the directions of the intake air flow and the output acoustic flow are represented;
- Figure 3a shows a transverse cross-section of the air filtration device referred to in the preceding figures;

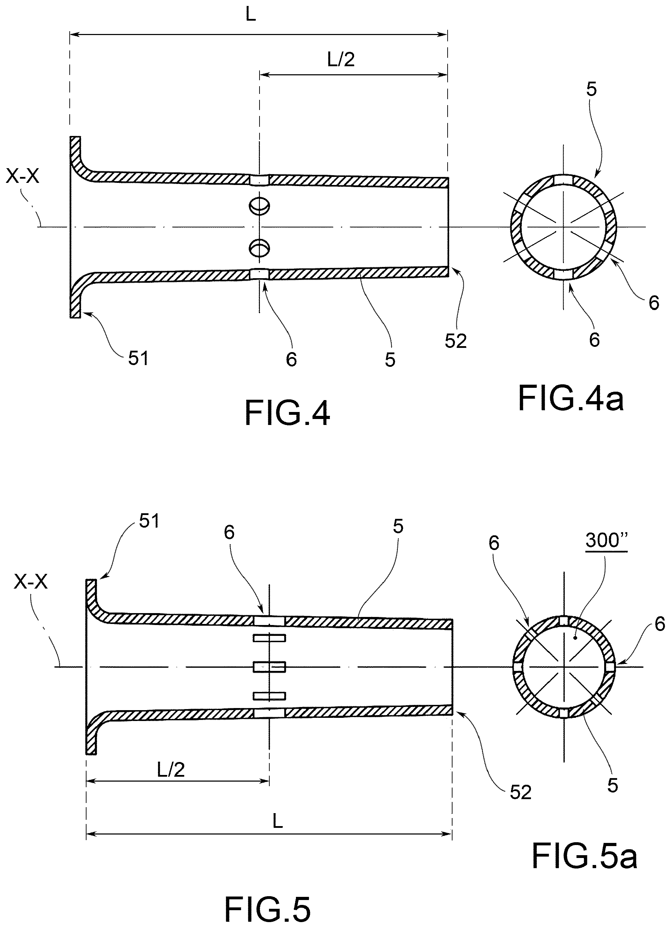

- Figures 4 and 4a are a longitudinal cross-section view and a transverse cross-section view of an internal structure included in the air filtration device of the present invention according to a first preferred embodiment,
- Figures 5 and 5a are a longitudinal cross-section view and a transverse cross-section view of an internal structure included in the air filtration device of the present invention according to a second preferred embodiment,

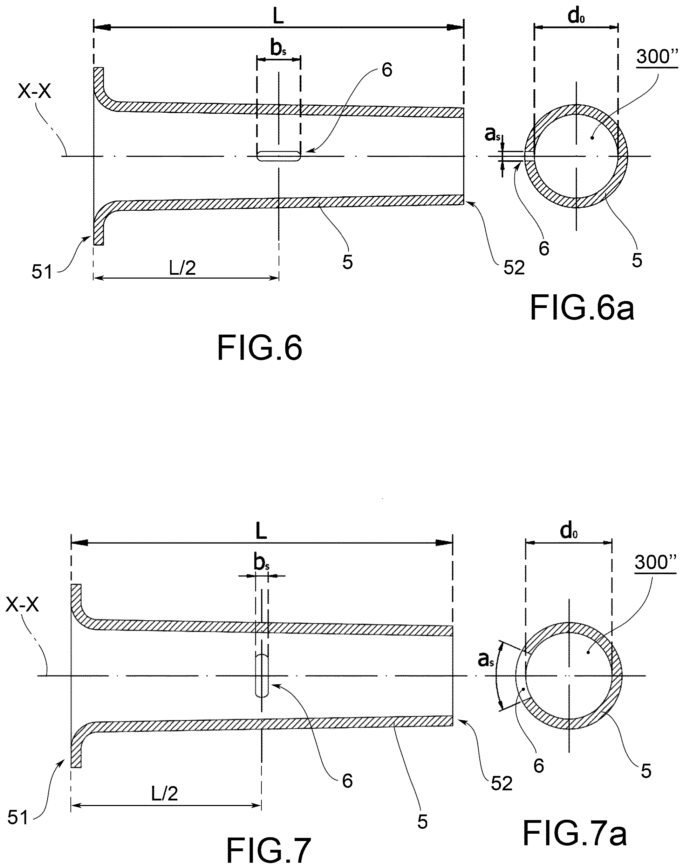

- Figures 6 and 6a are a longitudinal cross-section view and a transverse cross-section view of an internal structure included in the air filtration device of the present invention according to a third preferred embodiment,
- Figures 7 and 7a are a longitudinal cross-section view and a transverse cross-section view of an internal structure included in the air filtration device of the present invention according to a fourth preferred embodiment,

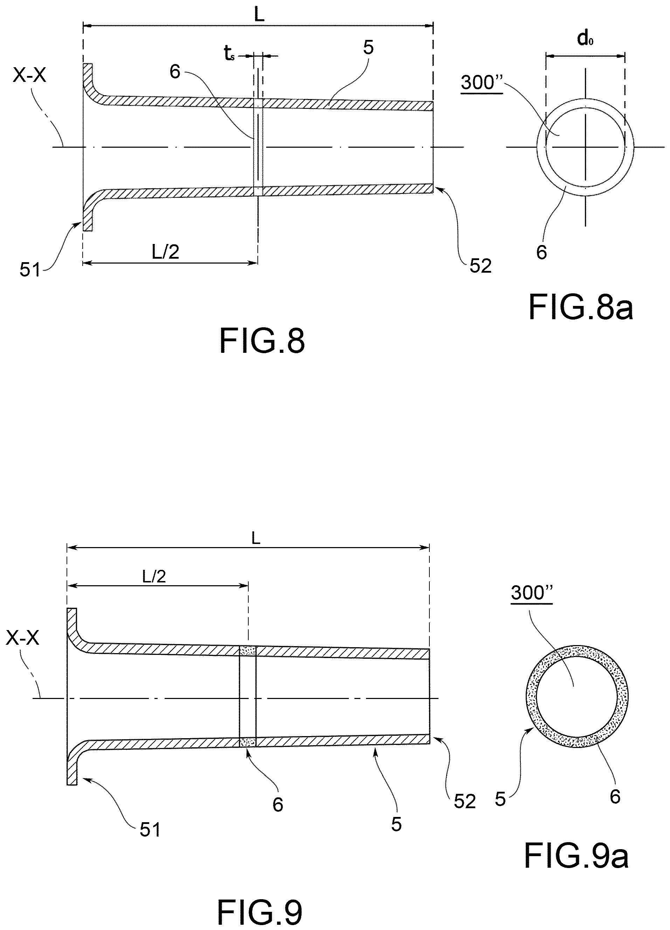

- Figures 8 and 8a are a longitudinal cross-section view and a transverse cross-section view of an internal structure included in the air filtration device of the present invention according to a fifth preferred embodiment,
- Figures 9 and 9a are a longitudinal cross-section view and a transverse cross-section view of an internal structure included in the air filtration device of the present invention according to a sixth preferred embodiment,

- Figures 10a and 10b represent two preferred embodiments of the internal structure comprised in the air filtration device of the present invention inside which the acoustic waveform associated with the first acoustic mode and the second acoustic mode respectively, is graphically represented;
- Figure 11 shows an acoustic measuring set by means of which phonetic tests and measurements have been conducted on various embodiments of the air filtration device;
- Figure 12a is a graph showing the results of some acoustic tests performed using the acoustic measuring set shown in Figure 11;
- Figure 12b is a graph showing the results of other acoustic tests using the acoustic measuring set shown in Figure 11;
- Figure 13 is a graph showing the results of further acoustic tests using the acoustic measuring set shown in Figure 11;
- Figure 14 is a graph showing the results of yet further acoustic tests performed using the acoustic measuring set shown in Figure 11;
- Figure 15 is a graph showing further tests performed using the acoustic measuring set shown in Figure 11;
- Figure 16 represents further tests performed using the acoustic measuring set shown in Figure 11.

Detailed Description

With reference to the appended drawings, reference numeral 1 denotes an air filtration device of an air intake system of a vehicle engine.

In particular, the air filtration device 1 according to the present invention finds application in the automotive sector, being positioned upstream of an internal combustion engine group to allow the filtered intake of a predefined quantity of air as far as the combustion chamber of the engine: the air filtration device 1 is suitable to allow the filtered intake of a predefined air flow rate needed for the engine to function properly.

In particular, the air intake system of the engine of a vehicle comprises an intake duct system suitable for fluidly connecting the air filtration device 1 and the engine, in particular the combustion chamber of the engine, or the combustion chambers of the engine.

According to the present invention, the air filtration device 1 comprises a tubular filter 3 fluidically connected to in the intake system duct.

The tubular filter 3 extends in length along an axis X-X between a first end 31 and a second end 32, axially spaced from each other.

The tubular filter 3 in fact comprises a central cavity 300 defined by an inner surface 30, through which filtered air flows.

The second end 32 in fact has an intake mouth 320 fluidly connected with the intake system duct.

According to the present invention, the tubular filter 3 is suitable to operate in suction, being traversable by the air to be aspirated (and filtered) from the outside to the inside. Outside the tubular filter 3, the "dirty side" is identified with air to be filtered, inside the tubular filter 3 (i.e. inside the central cavity 300), the "clean side" is identified with clean air.

According to a preferred embodiment, the tubular filter 3 is made of non-woven material in fibres interwoven with each other which can be made using meltblown and with synthetic fibres, such as polypropylene, or alternatively the tubular filter may be of a pleated septum type consisting of a non-woven fabric with cellulose fibres and / or synthetic fibres and / or glass fibres.

Preferably, the tubular filter 3 is cylindrical.

In some embodiments, the tubular filter 3 is conical or a truncated cone shape.

In addition, the air filtration device 1 of the present invention comprises an internal structure 4 suitable to improve the fluid dynamic behaviour of the tubular filter 3. In fact, thanks to the internal structure 4 the fact that only the portion proximal to the second end 32 of the tubular filter 3 accumulates the air in intake is obviated. In other words, thanks to the internal structure 4, the amount of air aspirated is distributed more evenly along the entire axial length of the tubular filter 3.

According to a preferred embodiment, the internal structure 4 has a substantially axial-symmetrical shape with respect to the axis X-X. In other words, the internal structure 4 extends in length along the axis X-X and each transverse cross-section thereof is substantially axial-symmetric with respect to the axis X-X.

According to the present invention, the internal structure 4 is housed in the central cavity 300 to cooperate with the tubular filter 3.

According to the present invention, the internal structure 4 comprises an outflow wall 5 comprising an inlet portion 51, proximal to the first end 31, radially proximal to the inner surface 30.

In a preferred embodiment, said inlet portion 51 engages the inner surface 30, preferably providing a radial support abutment.

Further, the outflow wall 5 comprises an outlet portion 52 proximal to the second end 32 and the intake mouth 320, radially distal from the inner surface 30.

According to a preferred embodiment, the outflow wall 5 is substantially cone-shaped, truncated, trumpet or horn shaped.

According to the present invention, the outflow wall 5 defines within the central cavity 300, an intake channel 300' into which clean air drawn through the tubular filter 3 fluidly connected to the intake mouth 320 flows.

Furthermore, according to the present invention, the outflow wall 5 defines inside the central cavity 300 an inner duct 300".

The intake channel 300' is therefore the channel delimited by the inner wall 30 and the outflow wall 5. The intake channel 300' flows into the intake mouth 320.

According to a preferred embodiment, the outflow wall 5 defines an annular outflow mouth 520 in fluid communication with the intake mouth 320, through which the intake air flows into the intake channel 300'.

Preferably, said outflow mouth 520 is axially located at the intake mouth 320.

The inner duct 300" is defined from within the outflow wall 5, in other words the inner duct 300" is surrounded by the outflow wall 5. The inner duct 300" also flows into the intake mouth 320.

Preferably, the axial distance between the input portion 51 and the output portion 52 is L.

According to a preferred embodiment, the outflow wall 5 extends the entire length of the tubular filter 3. Preferably, the axial distance between the inlet portion 51 and the outlet portion 52 is L and corresponds substantially to the axial distance present between the first end 31 and the second end 32.

According to a preferred embodiment, the internal structure 4 comprises at least one silencing element 6 suitable for intercepting and damping sound waves produced by the engine of the vehicle.

In particular, in fact, said silencing element 6 is positioned on the outflow wall 5 in a predefined axial position, along the axis X-X, between the inlet portion 51 and the outlet portion 52.

The silencing element 6 has the precise purpose of preventing the inner duct 300" from acting as a sounding board or conveyor for sound waves produced by the vehicle's engine into the environment. That is, the silencing element 6 allows the acoustic pressure inside the outflow wall to be reduced. In other words, the silencing element 6 displaces the characteristic frequency of the sound waves produced by the motor to higher, therefore less harmful frequencies, reducing the acoustic pressure inside the outflow wall.

According to a preferred embodiment, the silencing element 6 comprises a main silencing element 6' positioned in an axial position along the axis X-X substantially corresponding to the centreline of the outflow wall 5. In particular, the main silencing element 6' is positioned in an axial position corresponding to L/2.

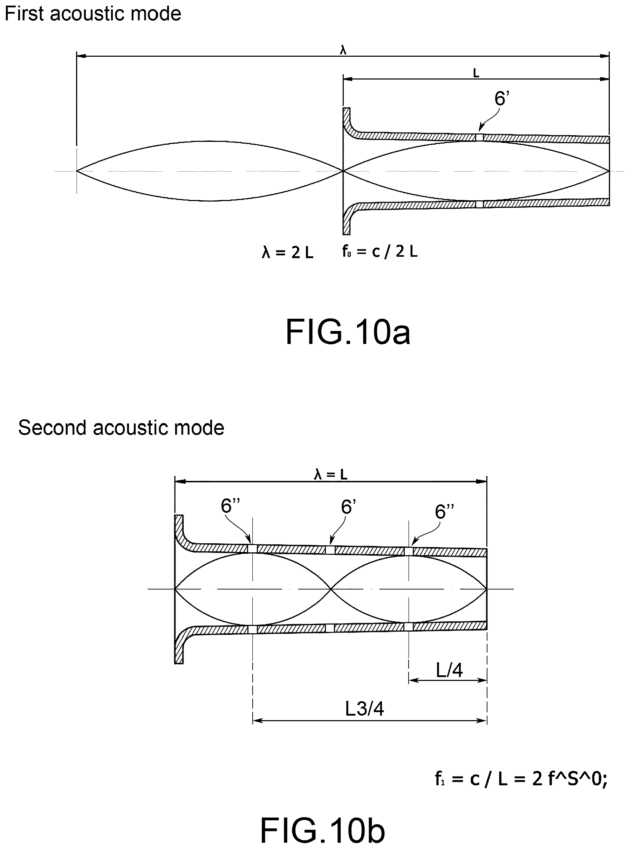

Preferably, the main silencing element 6' intercepts the highest intensity point of the acoustic wave referred to in the first acoustic mode, which is substantially located at L/2, as graphically represented in Figure 10a.

According to a preferred embodiment, the silencing element 6 comprises a secondary silencing element 6" positioned in an axial position along the axis X-X corresponding to a quarter of the outflow wall 5 being axially proximal to the inlet portion 51 or axially proximal to the outlet portion 52.

In other words, said secondary silencing element 6" is positioned at L/4 or at 3L/4.

According to a preferred embodiment, the silencing element 6 comprises two secondary silencing elements 6" respectively positioned in an axial position along the axis X-X corresponding to a quarter of the outflow wall 5 being axially proximal one to the inlet portion 51 and the other to the outlet portion 52, respectively.

In other words, said secondary silencing elements 6" are positioned at L/4 or at 3L/4.

Preferably, the secondary silencing elements 6" intercept the points of intensity greater than the acoustic wave referred to in the second acoustic mode, as graphically represented in Figure 10b.

According to a preferred embodiment, the silencing element 6 comprises a main silencing element 6' and at least one secondary silencing element 6". Preferably, in this way the points of greatest intensity of both the first acoustic mode and the second acoustic mode are intercepted.

According to a preferred embodiment, the silencing element 6 has the form of at least one transverse opening obtained in the outflow wall 5. A transverse opening is an opening that radially passes through the outflow wall 5. Preferably, then the silencing element 6 in such a preferred embodiment makes the outflow wall 5 acoustically permeable.

According to a preferred embodiment, the silencing element 6 is the shape of at least one hole.

Preferably, the silencing element 6 has the form of a plurality of mutually equally angularly spaced holes.

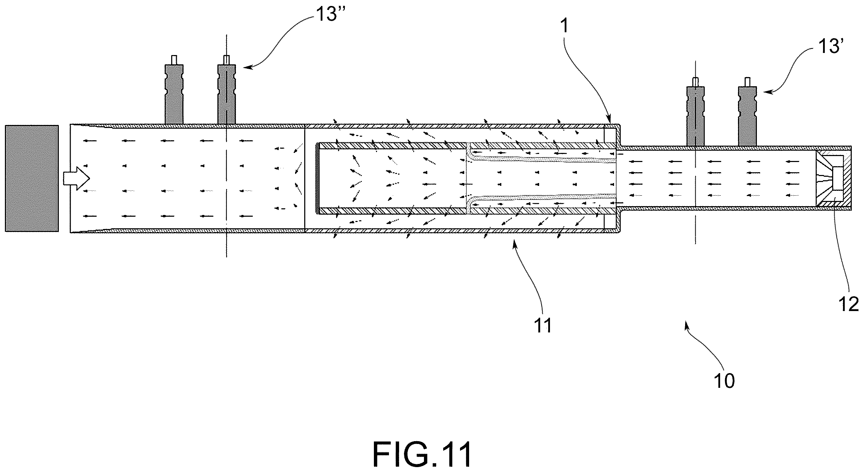

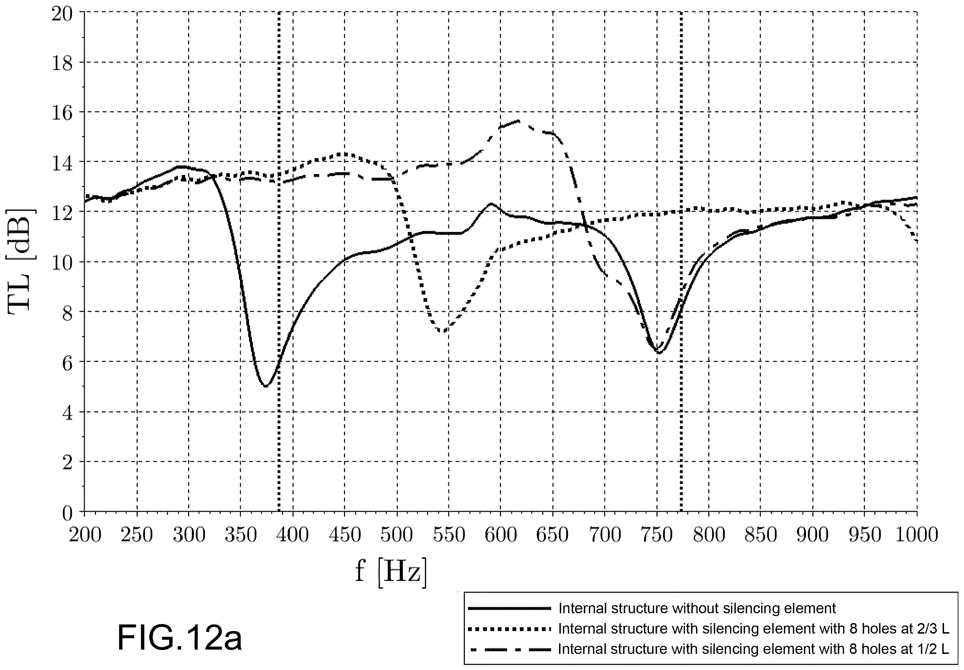

In this regard, it should be noted that Figure 12a graphically represents the results obtained by performing acoustic tests using a measurement set such as that shown in figure 11 with an air filtration device with an internal structure without a silencing element, and with an air filtration device such as that of the present invention wherein the internal structure comprises a silencing element 6 with eight holes positioned at L/2 and at 2L/3, respectively.

In this example, the presence of the silencing element 6 on the outflow wall 5 displaces the characteristic frequency of the first acoustic mode from a frequency of about 375 Hz to a frequency of about 550 Hz and 750 Hz, respectively. In general, the introduction of the silencing element 6 on the outflow wall 5 of the internal structure 4 of the air filtration device allows the displacement of the acoustic (fundamental) frequencies of the acoustic wave, which propagates through the same internal structure to higher frequencies, to be determined.

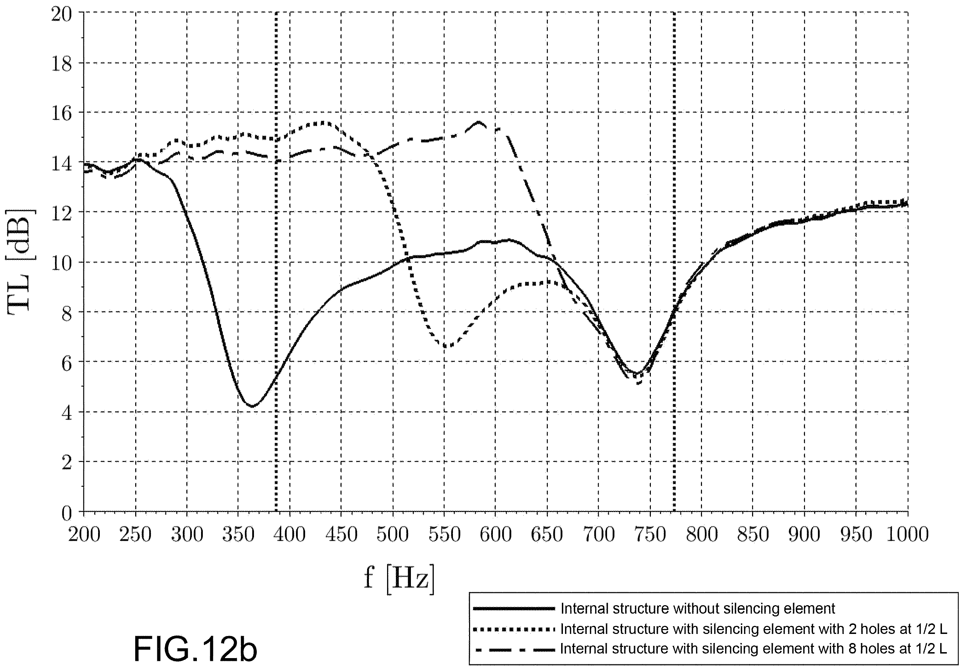

Preferably, by identifying an equivalent area such as the area corresponding to the hole-shaped through openings, a better soundproofing effect is obtained with a greater number of smaller holes. In this regard, it should be noted how Figure 12b graphically represents the results obtained by performing acoustic tests using a measuring set such as that shown in Figure 11 with an air filtration device with an internal structure 4 without silencing element 6 and with an air filtration device 1 such as that of the present invention comprising a main silencing element 6' with two holes and eight holes respectively.

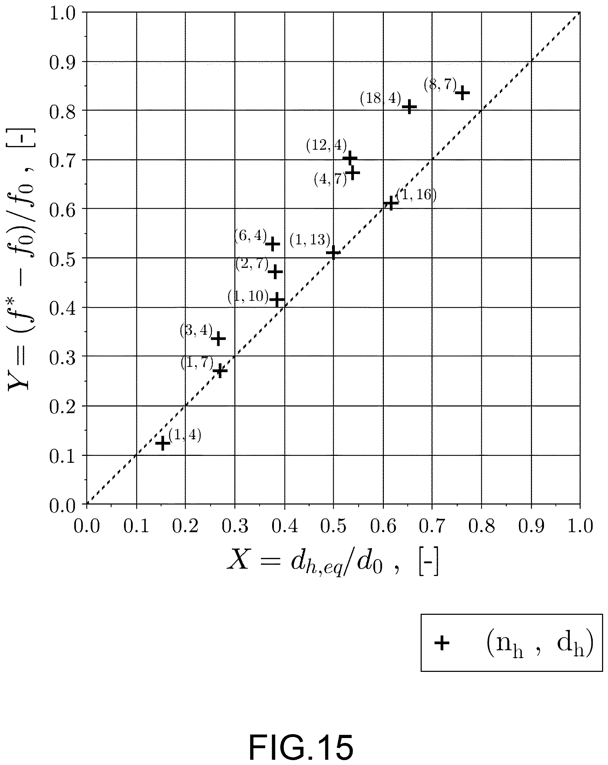

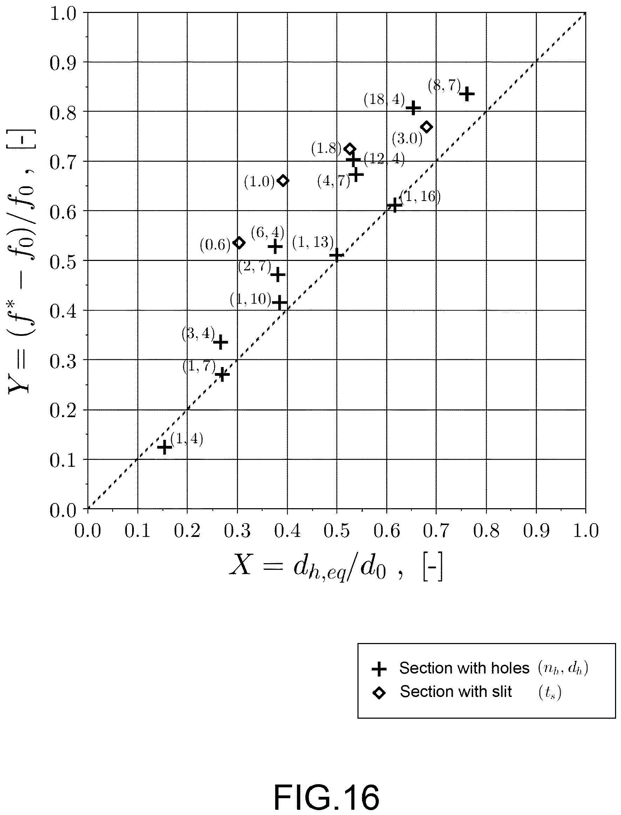

In this example, the presence of silencing elements 6 in the form of smaller holes allows a greater displacement of the frequency of the first acoustic mode; in particular, a displacement from about 375 Hz to about 550 Hz in the case of two holes and from about 350 Hz to about 750 Hz in the case of 8 holes is observed. In general, the introduction of the silencing element 6 on the outflow wall of the internal structure 4 of the air filtration device 1 in the form of one or more holes causes the displacement of the acoustic frequencies (fundamental) of the acoustic wave, which propagates through said internal structure, to higher frequencies; this is also shown in Figures 15 and 16 described below.

According to a preferred embodiment variant, the silencing element 6 has the form of at least one slot.

Preferably, the silencing element 6 has the form of a plurality of mutually equally spaced slots.

Preferably, by identifying an equivalent area such as the area corresponding to the slot-shaped through openings, a better soundproofing effect is obtained with a greater number of smaller slots (i.e. long and narrow).

Preferably, a slot is more effective than a hole as it is suitable for intercepting a larger portion of the sound wave than the circular hole.

According to some embodiment variants, the slots have a length such as to intercept the points of greater intensity of both the first acoustic mode and the second acoustic mode. For example, a slot is of such a length as to extend between L/2 and L/4 or 3L/4. For example, a slot is of such a length as to extend between L/4 and 3L/4.

According to other embodiment variants, the slots have their main length in the circumferential direction rather than in the axial direction.

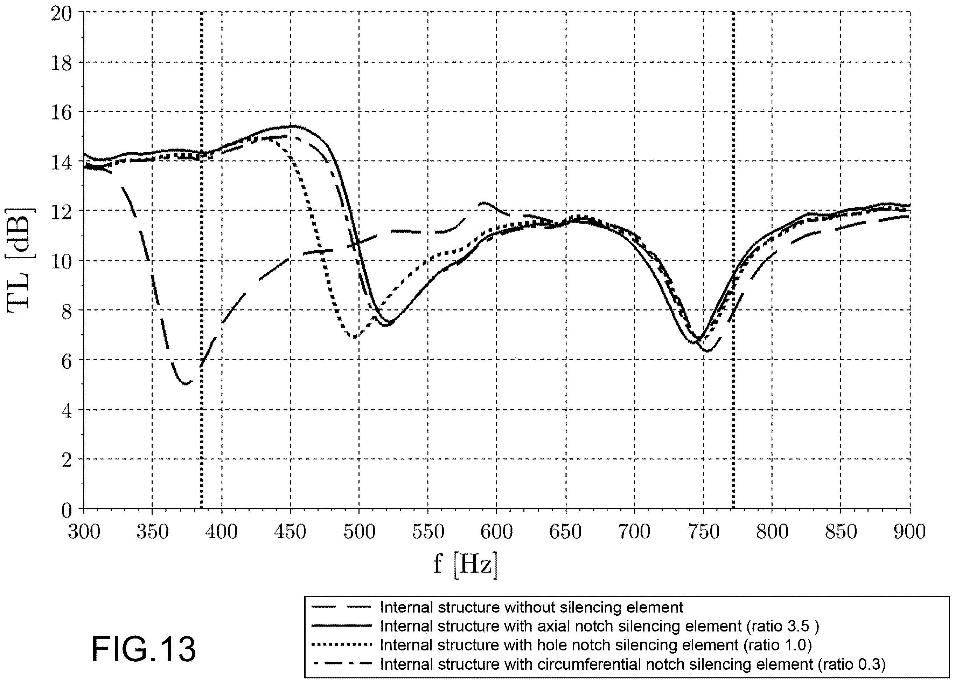

It should be noted how Figure 13 graphically represents the results obtained by performing acoustic tests using a measurement set such as that shown in figure 11 with an air filtration device with an internal structure 4 without a silencing element 6 and with an air filtration device 1 such as that of the present invention wherein the silencing element 6 comprises a main silencing element 6' in the form of an axial slot (having a length 3.5 times its width), in the form of a hole and in the form of a circumferential slot.

In this example, an elongated slot oriented essentially along the main axis of the outflow wall allows a greater displacement of the frequency of the first acoustic mode than in the case of a hole or a circular slot (i.e. oriented orthogonally to the axis of the outflow wall). As shown in the graph, a displacement from about 375 Hz to 490 Hz is observed in the case of a circumferential slot and from about 375 Hz to about 530 Hz in the case of an elongated slot oriented parallel to the main axis X-X. In general, the introduction of the silencing element on the internal structure of the air filtration device in the form of one or more slots causes the displacement of the fundamental frequencies of the acoustic wave which propagates through the said internal structure, to higher frequencies.

According to a further preferred embodiment, the silencing element 6 is the shape of a substantially annular slit.

Preferably, identifying an equivalent area such as the area corresponding to the through aperture defined by a substantially annular slit, a better soundproofing effect is obtained with slits of greater thickness.

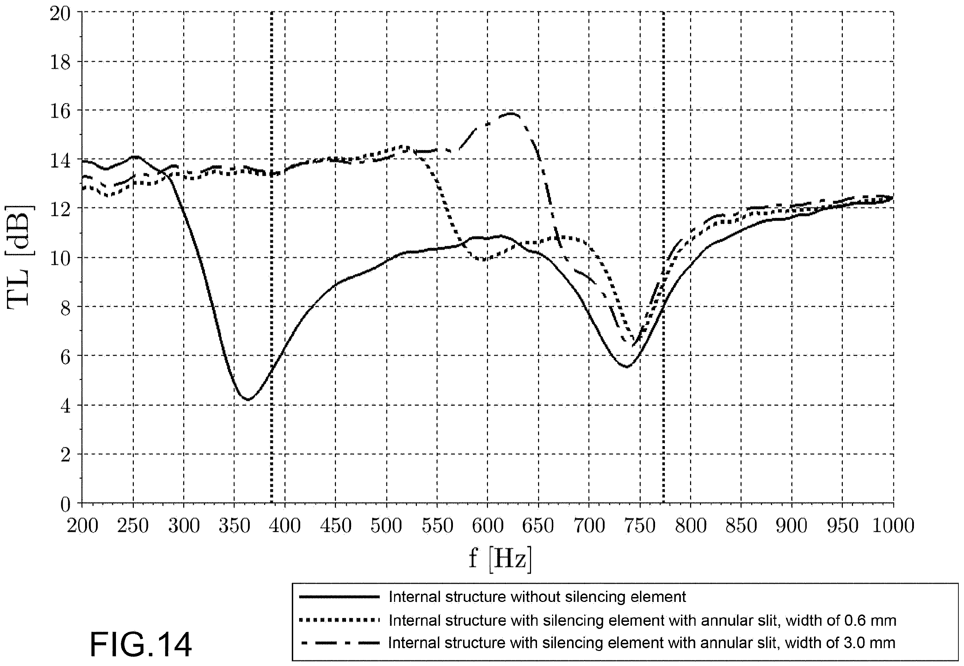

It should be noted how Figure 14 graphically represents the results obtained by performing acoustic tests using a measurement set such as that shown in figure 11 with an air filtration device with an internal structure 4 without a silencing element 6 and with an air filtration device 1 such as that of the present invention wherein the silencing element 6 comprises a main silencing element 6' in the form of an annular slit of differing width.

In fact, the presence of a silencing element in the form of an annular slit allows a displacement of the frequency of the first mode from about 375 Hz to about 590 Hz in the case of slits with a width of 0.6 mm and from 360 Hz to about 740 Hz in the case of slits with a width of 3 mm. In general, the introduction of the silencing element 6 on the outflow wall 5 of the internal structure 4 of the air filtration device 1 in the form of a slit determines the displacement of the fundamental frequencies of the acoustic wave which propagates through said internal structure to higher frequencies, to be determined.

Preferably, said slit physically separates the outflow wall 5 into two distinct portions.

According to a preferred embodiment, a layer of sound-absorbing material is positioned on the slit.

According to a preferred embodiment, the silencing element 6 is a sound-absorbing material element embedded in the outflow wall 5. Preferably, the silencing element 6 in sound-absorbent material has a substantially annular shape.

According to a preferred embodiment, said sound-absorbent material is an open-cell foam material, e.g. it is open-cell foam polyurethane.

According to a preferred embodiment, the air filtration device 1 comprises a plurality of tubular filters 3 inside which respective internal structures 4 are housed.

Preferably, said tubular filters 3 are positioned parallel to each other.

According to an embodiment variant, the air filtration device 1 comprises at least two tubular filters 3, 3' mutually connected in series. Preferably, at least the tubular filter 3 positioned proximal to the intake (in particular proximal to the intake mouth 320) comprises the internal structure 4. In this way, the air aspirated by a second tubular filter 3' distal from the intake mouth 320 flows in aspiration inside the inner duct 300" of the axially subsequent tubular filter 3.

In particular, therefore the air aspirated by a first tubular filter 3 flows in aspiration inside the inner duct 300" of the axially fluidically subsequent tubular filter 3.

According to a preferred embodiment, the axis X-X extends along a single direction, i.e. along a single straight line; the at least two tubular filters 3 are thus aligned on the axis X-X.

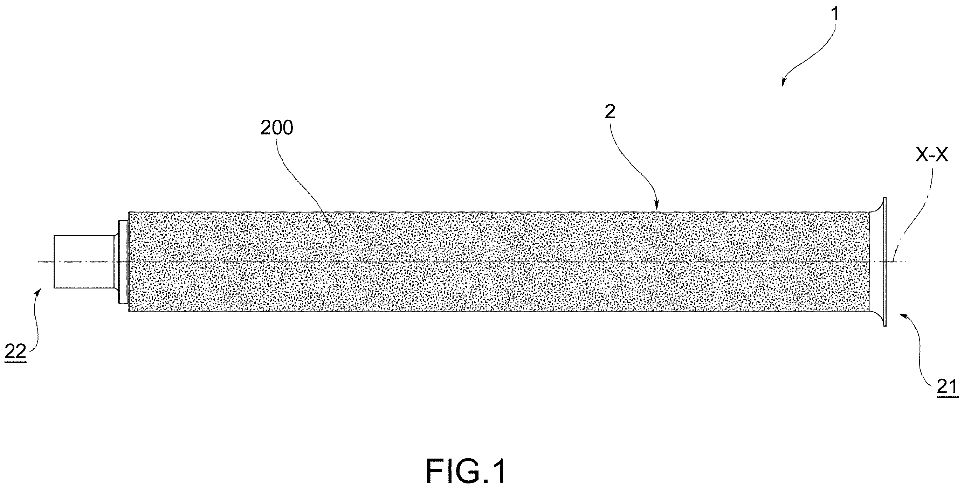

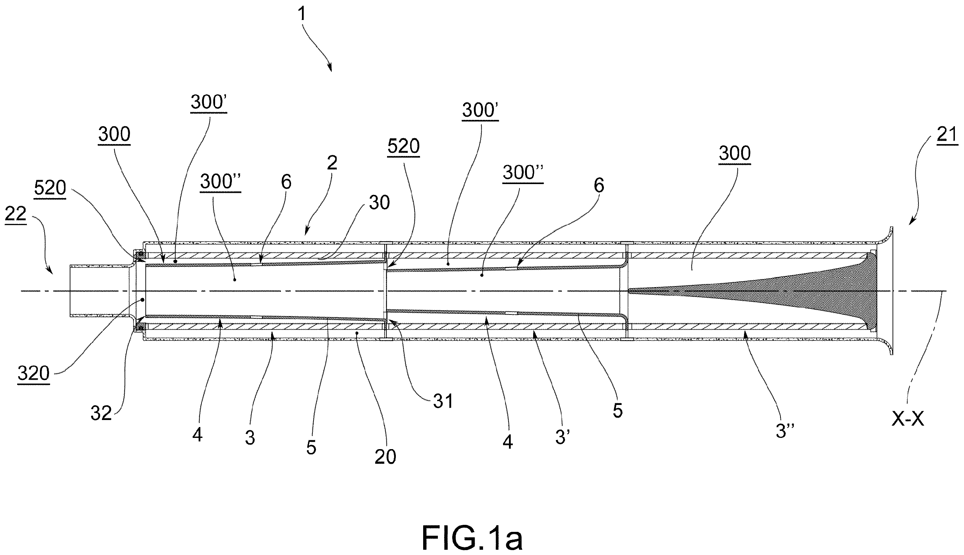

Preferably, such a type of embodiment is shown by way of example in Figure 1a, comprising three tubular filters 3, 3', 3", wherein the first tubular filter 3 and the second tubular filter 3' also comprise respective internal structures.

According to a preferred embodiment, the axis X-X extends along multiple directions, identifying different linear sections, wherein the air filtration device 1 comprises a connecting element 7 suitable for connecting the tubular filters 3 along said different linear sections.

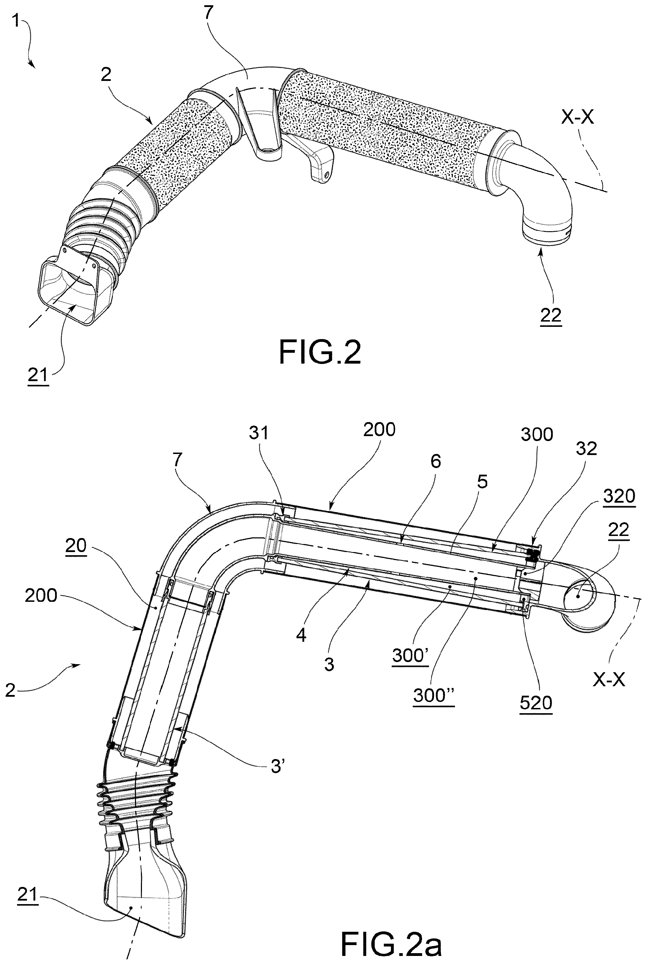

Preferably, such a type of embodiment is shown by way of example in Figure 2a, comprising two tubular filters 3, 3' wherein only the first tubular filter 3 comprises a respective internal structure 4.

According to a preferred embodiment, the air filtration device 1 further comprises an external intake manifold 2 defining an intake and filtration chamber 20 in which the tubular filters 3 are housed. Preferably, the "dirty side" with air to be filtered outside respective tubular filters 3 is the intake and filtration chamber 20 and the "clean side" with clean air is inside the respective tubular filters 3 (i.e. inside the central cavity 300).

Preferably, the external intake manifold 2 is made of porous material, through which air is aspirated from the environment.

Preferably, according to a preferred embodiment, the external intake manifold 2 at its axial ends also identifies an outlet end 22 and an inlet end 21 for air.

According to the embodiment in which each tubular filter 3 is positioned along a respective linear section, the intake manifold 2 also comprises respective manifold sections 200 which house the respective tubular filters 3 which extend along the respective linear sections. Preferably, the connecting element 7 is designed to support both the tubular filters 3 and the manifold sections 200.

The present invention also relates to an air intake system of the engine of a vehicle comprising an intake duct system fluidically connected to the vehicle engine and an air filtration device 1 having the aforementioned characteristics wherein the air filtration device 1 is fluidically connected to the intake system duct and the air from the external environment is aspirated through it and is cleaned of any suspended particles to then flow in said intake system duct.

As already mentioned, Figure 11 shows an acoustic measuring set 10 comprising a housing 11 suitable for housing the air filtration device or simulating the air filtration device (e.g. simulating the intake manifold). The acoustic measuring set 10 further comprises an acoustic player 12 suitable for reproducing the sound of the motor, preferably for reproducing the acoustic frequencies of the sound of the motor. In addition, the acoustic measurement set 10 comprises sound detection sensors 13', 13" preferably positioned at an input position and at an output position in which they are suitable to detect the respective sound, preferably the respective acoustic frequency intensity.

In addition, Figures 15 and 16 are briefly described below.

Figure 15 shows the frequency effect of the first acoustic mode of a main silencing element 6' comprising one or more holes.

In fact, the graph shows that, with the same Aeq Equivalent Area, a greater number of holes allows a greater displacement of the frequency f*.

In the graph the variables Y and X are defined as:

Y= relative frequency displacement of the first acoustic mode:

$$Y = \frac{f^* - f_o}{f_0}$$

$$f_o = \frac{c}{2\,L}$$

where L = internal structure length [m];
c= acoustic air speed [m/s]
fo= frequency of the first acoustic mode [Hz]

X = equivalent hole diameter

$$X = \frac{d_{h,eq}}{d_0}$$

where d0 = internal diameter of the internal structure [m]

$$d_{h,eq} = \sqrt{\frac{4\,A_{eq}}{\pi}}$$

$$A_{eq} = n_h \frac{\pi}{4}\,d_h^2$$

where nh= number of holes

dh = hole diameter [m]

Aeq = Hole equivalent area [m2]

With this definition of X and Y it is possible to parametrically analyse the effect of geometry and the number of holes on the value of f* and thus on the displacement of the frequency Y, as shown in the graph in Figure 15.

$$\frac{f^* - f_0}{f_0} \geq \frac{d_{h,eq}}{d_0}$$

The above equation allows the Equivalent Area Aeq of the hole(s) required to achieve a certain frequency displacement of the first acoustic mode, and thus the desired attenuation of the noise in output from the air filtration device to be estimated.
Figure 16 shows the frequency effect of the first acoustic mode of a main silencing element 6' comprising one or more holes or a slit.
In fact, the graph shows that, with the same Aeq Equivalent Area, a greater number of holes allows a greater displacement of the frequency f*.
The graph shows that, with the same Equivalent Area Aeq, the slit is able to determine a greater displacement of the frequency f*.
In the graph the variable Y is defined as described above, the variable X, for the holes is defined as above, while the variable X for the slit is defined starting from the fact that the Equivalent Area [m2] is defined as:

$$A_{eq} = \pi \, d_0 \, t_s$$

where d0 = internal diameter of the structure [m],
ts= slit width [m] (or slit thickness [m]).

Consequently, by applying the above mentione inequation, the graph in Figure 16 is obtained estimating the Equivalent Area Aeq of the holes and the slit needed to achieve certain frequency displacement, and thus the desired attenuation of the noise coming out of the air filtration device.
Similarly, the same type of reasoning can also be adopted (obtaining a similar graph) for a solution with a main silencing element 6' in the form of a slot.
Innovatively, the air filtration device and the air intake system according to the present invention amply fulfil the aforementioned purpose, overcoming the drawbacks typical of the prior art.
Advantageously, a high filtering surface is obtained that allows a high flow of filtered air to the engine.
Advantageously, the noise produced by the engine is prevented from exiting, and in some cases from being amplified by the very air filtration device.
Advantageously, the air filtration device comprises at least one silencing element that allows the resonance frequencies of the acoustic wave coming from the motor to be displaced to higher frequencies while reducing the intensity thereof.
Advantageously, both intake air filtration and engine noise silencing are optimized in reduced dimensions. For example, advantageously, to minimize the noise emissions of the engine, the volumes available inside the tubular filter elements are effectively exploited by reducing or eliminating the resonance volumes usually installed on the intake systems of internal combustion engines.
Advantageously, the air filtration device of the present invention can be standardised in different configurations and layouts, even mixed as needed. Advantageously, solutions are foreseeable in which the main silencing elements are in the form of slots, while the secondary silencers are hole-shaped, or slit-shaped, or vice versa.
Advantageously, the air filtration device of the present invention can be designed with a silencing element (or elements) depending on the engine of the vehicle on which said device is installed.
Advantageously, the position of the silencing element(s) on the internal structure can be defined and extended to filter elements of different size (diameter and/or length) depending on the relative dimensions of the air filtration device and the air flow rate required by the internal combustion engine.
Advantageously, the exploitation of the space in the engine compartment is optimized.
Advantageously, the internal structure comprising the silencing element mechanically supports the filtering elements by reducing the number of components including the air filtration device and thus the production costs associated with said intake device and system.
Advantageously the tubular filter can be inserted (and blocked) or extracted (and unlocked) by means of simple and intuitive operations.
It is clear that a person skilled in the art may make modifications to the air filtration device and the air intake system described above so as to satisfy contingent requirements, all contained within the scope of protection as defined by the following claims.

List of reference numbers:

| | |
|---|---|
| 1 | air filtration device |
| 2 | intake manifold |
| 20 | air intake and filtration chamber |
| 21 | inlet end |
| 22 | outlet end |
| 200 | manifold sections |
| 3 | tubular filter |

| | |
|---|---|
| 3' | second tubular filter |
| 3" | third tubular filter |
| 30 | inner surface |
| 31 | first end |
| 32 | second end |
| 320 | intake mouth |
| 300 | central cavity |
| 300' | intake channel |
| 300" | inner duct |
| 4 | internal structure |
| 5 | outflow wall |
| 51 | inlet portion |
| 52 | outlet portion |
| 520 | outflow mouth |
| 6 | silencing element |
| 6' | main silencing element |
| 6" | secondary silencing elements |
| 7 | connecting element |
| 10 | acoustic measurement set |
| 11 | housing |
| 12 | acoustic player |
| 13', 13" | detection sensors |
| X-X | axis |

**Claims**

1. An air filtration device (1) of an air intake system of a vehicle comprising an air intake system duct fluidly connecting the air filtration device (1) and the engine of the vehicle, wherein the air filtration device (1) comprises:

   - a tubular filter (3) extending in length along an axis (X-X) between a first end (31) and a second end (32), comprising a central cavity (300) defined by an inner surface (30), wherein the tubular filter (3) is crossable by the aspirated air from the outside to the inside comprising at the second end (32) an intake mouth (320) fluidly connected with the intake system duct;
   - an internal structure (4) extending in length along the axis (X-X) housed in the central cavity (300) comprising:

     i) an outflow wall (5) comprising an inlet portion (51), proximal to the first end (31) radially proximal to the inner surface (30), and an outlet portion (52), proximal to the second end (32) and to the intake mouth (320), radially distal from the inner surface (30), wherein the outflow wall (5) defines inside the central cavity (300) an intake channel (300') fluidly connected to the intake mouth (320), in which clean air drawn in through the tubular filter (3) flows and defines inside the central cavity (300) an inner duct (300");
     ii) at least one silencing element (6) suitable to intercept and dampen the sound waves produced by the vehicle engine, wherein the silencing element (6) is positioned on the outflow wall (5) in a predefined axial position along the axis (X-X), between the inlet portion (51) and the outlet portion (52).

2. The air filtration device (1) according to claim 1, wherein the silencing element (6) comprises a main silencing element (6') positioned in an axial position along the axis (X-X) substantially corresponding to the centreline of the outflow wall (5).

3. The air filtration device (1) according to any one of the preceding claims, wherein the silencing element (6) comprises at least one secondary silencing element (6") respectively positioned in an axial position along the axis (X-X) substantially corresponding to a quarter of the outflow wall (5) being axially proximal to the inlet portion (51) or axially proximal to the outlet portion (52), preferably comprises two secondary silencing elements (6") respectively positioned in an axial position along the axis (X-X) corresponding to a quarter of the outflow wall (5) being respectively axially proximal one to the inlet portion (51) and the other axially proximal to the outlet portion (52).

4. The air filtration device (1) according to claims 2 and 3, wherein the silencing element (6) comprises a main silencing element (6') and at least one secondary silencing element (6").

5. The air filtration device (1) according to any one of the preceding claims, wherein the silencing element (6) has the form of at least one transverse opening made in the outflow wall (5) suitable for making the outflow wall (5) acoustically permeable.

6. The air filtration device (1) according to claim 5, wherein the silencing element (6) has the form of at least one hole, preferably a plurality of mutually angularly spaced holes.

7. The air filtration device (1) according to claim 5, wherein the silencing element (6) has the form of at least one slot, which extends along a longitudinal section parallel to the axis (X-X), preferably of a plurality of mutually angularly equally spaced slots.

8. The air filtration device (1) according to claim 5, wherein the silencing element (6) has the form of a substantially annular slit.

9. The air filtration device (1) according to any one of the claims from 1 to 4, wherein the silencing element (6) is a sound-absorbing material element embedded in the outflow wall (5).

**10.** The air filtration device (1) according to any one of the preceding claims, wherein the outflow wall (5) has a substantially axial-symmetric shape with respect to the axis (X-X) defining an annular outflow mouth (520) in fluidic communication with the intake mouth (320).

**11.** The air filtration device (1) according to any one of the preceding claims, comprising a plurality of tubular filters (3) inside which respective internal structures (4) are housed, wherein said tubular filters (3) are positioned parallel to each other.

**12.** The air filtration device (1) according to any one of the claims from 1 to 10, comprising at least two tubular filters (3, 3', 3") reciprocally connected in series, wherein at least the tubular filter (3) proximal to the intake comprises the internal structure (4), such that the air aspirated by a second tubular filter (3', 3") distal from the intake mouth (320) flows in aspiration inside the inner duct (300") of the axially subsequent tubular filter (3).

**13.** The air filtration device (1) according to claim 12, wherein the axis (X-X) extends along a single direction, i.e. along a single straight line.

**14.** The air filtration device (1) according to claim 12, wherein the axis (X-X) extends along multiple directions, identifying different linear sections, wherein the air filtration device (1) comprises a connecting element (7) suitable for connecting the tubular filters (3) along said different linear sections.

**15.** The air filtration device (1) according to any one of the preceding claims, further comprising an external intake manifold (2) made of porous material, through which air is drawn from the environment, wherein the intake manifold (2) defines an intake and filtration chamber (20) in which the tubular filter (3) is housed.

**16.** The air filtration device (1) according to claim 15 and claim 14, wherein multiple tubular filters (3, 3', 3") are housed in the intake manifold (2), wherein each tubular filter (3) is positioned along a respective linear section, wherein the intake manifold (2) also comprises respective manifold sections (200) housing the respective tubular filters (3) extending along the respective linear sections.

**17.** An air intake system of the engine of a vehicle comprising a suction duct system fluidically connected to the vehicle engine and an air filtration device (1), according to any one of the preceding claims, fluidically connected to said system suction duct, wherein the air from the external environment is aspirated through the air filtration device (1) and is cleaned of any suspended particles to then flow in said system suction duct.

1

2

200

22

21

X-X

EP 3 711 841 A1

FIG.1

FIG.1a

EP 3 711 841 A1

FIG.2

FIG.2a

FIG.3a

Intake air flow

FIG.3'

Acoustic flow

FIG.3"

FIG.4

FIG.4a

FIG.5

FIG.5a

FIG.6

FIG.6a

FIG.7

FIG.7a

FIG.8

FIG.8a

FIG.9

FIG.9a

First acoustic mode

$\lambda = 2\,L \qquad f_0 = c\,/\,2\,L$

# FIG.10a

Second acoustic mode

$f_1 = c\,/\,L = 2\,f^S_0;$

# FIG.10b

FIG.11

FIG.12a

Internal structure without silencing element
Internal structure with silencing element with 8 holes at 2/3 L
Internal structure with silencing element with 8 holes at 1/2 L

EP 3 711 841 A1

FIG.12b

Internal structure without silencing element
Internal structure with silencing element with 2 holes at 1/2 L
Internal structure with silencing element with 8 holes at 1/2 L

EP 3 711 841 A1

Legend:
— Internal structure without silencing element
— Internal structure with axial notch silencing element (ratio 3.5 )
······· Internal structure with hole notch silencing element (ratio 1.0)
– – Internal structure with circumferential notch silencing element (ratio 0.3)

Y-axis: TL [dB]
X-axis: f [Hz]

**FIG.13**

FIG.14

Internal structure without silencing element

Internal structure with silencing element with annular slit, width of 0.6 mm

Internal structure with silencing element with annular slit, width of 3.0 mm

TL [dB]

f [Hz]

FIG.15

FIG.16

Europäisches
Patentamt

European
Patent Office

Office européen
des brevets

# EUROPEAN SEARCH REPORT

**Application Number**

EP 20 16 4032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/098372 A1 (UFI FILTERS SPA [IT]) 15 June 2017 (2017-06-15) * figures 1, 2 * | 1-17 | INV. B01D46/00 B01D46/24 B01D46/42 F02M35/024 F02M35/12 |
| A | US 2 385 814 A (KAMRATH HERBERT G) 2 October 1945 (1945-10-02) * figure 1 * | 1-17 | |
| A | US 2003/150671 A1 (KERR JOHN DAVID [GB]) 14 August 2003 (2003-08-14) * figure 1 * | 1-17 | |
| A | DE 692 22 855 T2 (WALKER DESIGN INC [US]) 19 February 1998 (1998-02-19) * figure 1 * | 1-17 | |

**TECHNICAL FIELDS SEARCHED (IPC)**

B01D
F02M

The present search report has been drawn up for all claims

| Place of search | Date of completion of the search | Examiner |
|---|---|---|
| Munich | 18 June 2020 | Skowronski, Maik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 4032

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2020

| Patent document cited in search report | | | Publication date | Patent family member(s) | | | Publication date |
|---|---|---|---|---|---|---|---|
| WO 2017098372 | A1 | | 15-06-2017 | CN | 108602003 | A | 28-09-2018 |
| | | | | EP | 3386605 | A1 | 17-10-2018 |
| | | | | US | 2018361298 | A1 | 20-12-2018 |
| | | | | WO | 2017098372 | A1 | 15-06-2017 |
| US 2385814 | A | | 02-10-1945 | NONE | | | |
| US 2003150671 | A1 | | 14-08-2003 | GB | 2364547 | A | 30-01-2002 |
| | | | | US | 2003150671 | A1 | 14-08-2003 |
| DE 69222855 | T2 | | 19-02-1998 | AT | 159566 | T | 15-11-1997 |
| | | | | AU | 659050 | B2 | 04-05-1995 |
| | | | | CA | 2114550 | A1 | 18-02-1993 |
| | | | | DE | 69222855 | T2 | 19-02-1998 |
| | | | | DK | 0597020 | T3 | 20-07-1998 |
| | | | | EP | 0597020 | A1 | 18-05-1994 |
| | | | | ES | 2108131 | T3 | 16-12-1997 |
| | | | | JP | H06509623 | A | 27-10-1994 |
| | | | | TW | 210372 | B | 01-08-1993 |
| | | | | US | 5140957 | A | 25-08-1992 |
| | | | | WO | 9303266 | A1 | 18-02-1993 |

EPO FORM P0459

For more details about this annex : see Official Journal of the European Patent Office, No. 12/82

**EP 3 711 841 A1**

**REFERENCES CITED IN THE DESCRIPTION**

**Patent documents cited in the description**

- WO 2013057549 A